# EUROPEAN PATENT APPLICATION

(11) **EP 4 125 046 A1**
(43) Date of publication of application: **01.02.2023**
(21) Application number: 21197335.9
(22) Date of filing: 17.09.2021
(51) Int. Cl.: G06T 19/00

(54) **A VISUAL DATA DELIVERY SYSTEM, A DISPLAY SYSTEM AND METHODS OF OPERATING THE SAME**

(30) Priority: 29.07.2021 US 202163226948 P
(71) Applicant: Koninklijke Philips N.V., 5656 AG Eindhoven (NL)
(72) Inventor: WEBER, Frank Michael, 5656 AE Eindhoven (NL); GROTH, Alexandra, 5656 AE Eindhoven (NL); GREINER, Harald, 5656 AE Eindhoven (NL); SUTTON, Jonathan Thomas, 5656 AE Eindhoven (NL); RAJU, Balasundar Iyyavu, 5656 AE Eindhoven (NL); BHARAT, Shyam, 5656 AE Eindhoven (NL); BINGLEY, Peter, 5656 AE Eindhoven (NL)
(74) Representative: Philips Intellectual Property & Standards

(57) **Abstract**

According to an aspect, there is provided a computer-implemented method of operating a visual data delivery system. The method comprises: processing (901) a sequence of 3-dimensional, 3D, images of a body to generate first 2-dimensional, 2D, image data representing a first sequence of 2D images of the body, wherein the 2D images are images of the body in a 2D image plane through the 3D images, and wherein an amount of data representing the first 2D image data is less than an amount of data representing the 3D images from which the first 2D image data is generated; sending (903) the first 2D image data to a display system for display of the first sequence of 2D images of the body by the display system; receiving (905) a 2D image plane adjustment indication from the display system, wherein the 2D image plane adjustment indication indicates a required rotation and/or translation of the 2D image plane; processing (907) the sequence of 3D images and/or a further sequence of 3D images to generate second 2D image data representing a second sequence of 2D images of the body, wherein the 2D images in the second sequence of 2D images are images of the body in the rotated and/or translated 2D image plane; and sending (909) the second 2D image data to the display system for display of the second sequence of 2D images of the body by the display system.

## Description

### FIELD OF THE INVENTION

This disclosure relates to a visual data delivery system, a display system, and methods of operating the same, and in particular to the processing of a sequence of 3-dimensional (3D) images of a body to generate a sequence of 2-dimensional (2D) images of the body for display.

### BACKGROUND OF THE INVENTION

Ultrasound (US) imaging is used by sonographers and physicians to diagnose various health conditions, for example, cardiac conditions. In contrast to other types of medical imaging, ultrasound imaging has many advantages such as the absence of ionizing radiation and imaging can be obtained in a non-invasive and non-intrusive manner. US imaging can be used to obtain 3D image data of the body, i.e. data that can be used to display a 3D image of the body that can be rotated to view the body from different viewpoints. 3D image data is also referred to as '3D volume data'.

Many new or useful clinical insights can be generated from continuous monitoring of a patient's cardiac (or other) condition using ultrasound. Thereby, multiple data streams can be gathered from a single patient in real-time. While these data streams can provide the physician with timely, critical insights into the status of a patient, the amount of data can be confusing and lack context. In particular, the interpretation of ultrasound images is often regarded as a complicated task compared to other medical imaging modalities. Thus, novel tools and approaches to (image) data visualization based on intelligent image analysis and signal processing algorithms have surfaced.

In patient monitoring systems, the amount of 3D image data that is streamed in real-time in a continuous manner can be very high, which means that handling the internal and external data transfer bandwidths of the system can be a challenge. Hence, bottlenecks for data transfer between different subsystems can occur. In that case a straightforward 'brute force' approach for data transfer is not possible anymore (i.e. an approach in which all data is transferred) and the system architect has to come up with intelligent solutions/workflows to reduce the amount of data that must be transferred between subsystems.

Data transfer bandwidth is not the only issue preventing the streaming of 3D data to a certain subsystem. Another issue is the limited computation power of subsystems. If the computation power of a subsystem is insufficient to process and display the data, then there is no point streaming the data to the subsystem.

In current (cardiac) monitoring systems, the bottleneck is typically the external link between the subsystem that generates the ultrasound images and the patient monitor that displays the images since the cable connecting both subsystems can have a transfer bandwidth that is less than the bandwidth required to stream the 3D image data. In other systems, the internal or external data bandwidth can be limited by cables or wireless connections. Therefore, ultrasound 3D volume data typically cannot be continuously transferred in real-time between two subsystems and the image exchange is limited to streaming a 2D video sequence extracted from the 3D image data. These video sequences can include a relevant image slice (i.e. the plane through the 3D body that is being observed in the 3D image data), as well as additional overlaid information like organ contours, measurements, color-coding and so on.

### SUMMARY OF THE INVENTION

In clinical practice, a user of a display system typically wants to change the anatomical view of the currently displayed 2D video stream to view the body from different viewpoints. This is referred to as a 3D image interaction with the 3D image data, and an example of such a 3D image interaction is the readjustment of the heart's orientation in the 2D video stream, leading to a different cut/image plane through the 3D volume data. However, current systems do not provide a mechanism by which a user of a display system that is displaying a 2D video sequence remotely determined from 3D image data can perform this 3D interaction at the display system. Hence, there is a need for a solution that allows for a 3D image interaction without having direct access to the actual 3D image data.

According to a first specific aspect, there is provided a computer-implemented method of operating a visual data delivery system. The method comprises processing a sequence of 3-dimensional, 3D, images of a body to generate first 2-dimensional, 2D, image data representing a first sequence of 2D images of the body, wherein the 2D images are images of the body in a 2D image plane through the 3D images, and wherein an amount of data representing the first 2D image data is less than an amount of data representing the 3D images from which the first 2D image data is generated; sending the first 2D image data to a display system for display of the first sequence of 2D images of the body by the display system; receiving a 2D image plane adjustment indication from the display system, wherein the 2D image plane adjustment indication indicates a required rotation and/or translation of the 2D image plane; processing the sequence of 3D images and/or a further sequence of 3D images to generate second 2D image data representing a second sequence of 2D images of the body, wherein the 2D images in the second sequence of 2D images are images of the body in the rotated and/or translated 2D image plane; and sending the second 2D image data to the display system for display of the second sequence of 2D images of the body by the display system.

According to a second aspect, there is provided a computer-implemented method of operating a display system. The method comprises: receiving first 2-dimensional, 2D, image data representing a first sequence of 2D images of a body from a visual data delivery system, wherein the 2D images are images of the body in a 2D image plane through 3-dimensional, 3D, images of the body; displaying the first sequence of 2D images; receiving a user input from a user of the display system, wherein the user input indicates a required rotation and/or translation of the 2D image plane; sending a 2D image plane adjustment indication to the visual data delivery system, wherein the 2D image plane adjustment indication indicates the required rotation and/or translation of the 2D image plane; receiving second 2D image data representing a second sequence of 2D images of the body from the visual data delivery system, wherein the second sequence of 2D images are images of the body in the rotated and/or translated 2D image plane; and displaying the second sequence of 2D images.

According to a third aspect, there is provided a computer program product comprising a computer readable medium having computer readable code embodied therein, the computer readable code being configured such that, on execution by a suitable computer or processor, the computer or processor is caused to perform the method according to the first aspect, the second aspect, or any embodiments thereof.

According to a fourth aspect, there is provided a visual data delivery system, the visual data delivery system comprising a processing unit and interface circuitry. The visual data delivery system configured to: process, using the processing unit, a sequence of 3-dimensional, 3D, images of a body to generate first 2-dimensional, 2D, image data representing a first sequence of 2D images of the body, wherein the 2D images are images of the body in a 2D image plane through the 3D images, and wherein an amount of data representing the first 2D image data is less than an amount of data representing the 3D images from which the first 2D image data is generated; send, via the interface circuitry, the first 2D image data to a display system for display of the first sequence of 2D images of the body by the display system; receive, via the interface circuitry, a 2D image plane adjustment indication from the display system, wherein the 2D image plane adjustment indication indicates a required rotation and/or translation of the 2D image plane; process, using the processing unit, the sequence of 3D images and/or a further sequence of 3D images to generate second 2D image data representing a second sequence of 2D images of the body, wherein the 2D images in the second sequence of 2D images are images of the body in the rotated and/or translated 2D image plane; and send, via the interface circuitry, the second 2D image data to the display system for display of the second sequence of 2D images of the body by the display system.

According to a fifth aspect, there is provided a display system, the display system comprising a display screen and interface circuitry. The display system is configured to: receive, via the interface circuitry, first 2-dimensional, 2D, image data representing a first sequence of 2D images of a body from a visual data delivery system, wherein the 2D images are images of the body in a 2D image plane through 3-dimensional, 3D, images of the body; display, using the display screen, the first sequence of 2D images; receive, via the interface circuitry, a user input from a user of the display system, wherein the user input indicates a required rotation and/or translation of the 2D image plane; send, via the interface circuitry, a 2D image plane adjustment indication to the visual data delivery system, wherein the 2D image plane adjustment indication indicates the required rotation and/or translation of the 2D image plane; receive, via the interface circuitry, second 2D image data representing a second sequence of 2D images of the body from the visual data delivery system, wherein the second sequence of 2D images are images of the body in the rotated and/or translated 2D image plane; and display, using the display screen, the second sequence of 2D images.

According to a sixth aspect, there is provided an imaging system comprising one or both of a visual data delivery system according to the fourth aspect or any embodiment thereof, and a display system according to the fifth aspect or any embodiment thereof. In some embodiments, the imaging system can further comprise an image acquisition system configured to obtain the sequence of 3D images of the body.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a block diagram of a system in which the techniques described herein can be applied;
Fig. 2 is a block diagram of an ultrasound-based embodiment of the system of Fig. 1;
Fig. 3 is a block diagram of a visual data delivery system according to various embodiments;
Fig. 4 is a block diagram of a display system according to various embodiments;
Fig. 5 is a flow chart illustrating a method according to various embodiments;
Fig. 6(a) is a 2D ultrasound image representing a cut plane through a 3D ultrasound image of a heart, and Fig. 6(b) shows a 3D model of the heart overlaid on the 2D ultrasound image of Fig. 6(a);
Figs. 7(a) and (b) are illustrations of a 3D model of a heart in different orientations;
Fig. 8 is an illustration of a 2D cut plane in an initial position/orientation through a 3D model and in an adjusted position/orientation;
Fig. 9 is a flow chart illustrating a method of operating a visual data delivery system according to various embodiments; and
Fig. 10 is a flow chart illustrating a method of operating a display system according to various embodiments.

### DETAILED DESCRIPTION OF EMBODIMENTS

As noted above, current ultrasound (US) systems (and other types of 3D imaging systems) only allow a user of a display system to view a 2D video sequence determined from 3D image data by a remote system; the user is not able to manipulate the 2D view of the 3D image data. Thus, the techniques described herein enable a user to enact a 3D image interaction and to observe the result of the interaction in the displayed 2D sequence without having direct access to the actual 3D image data.

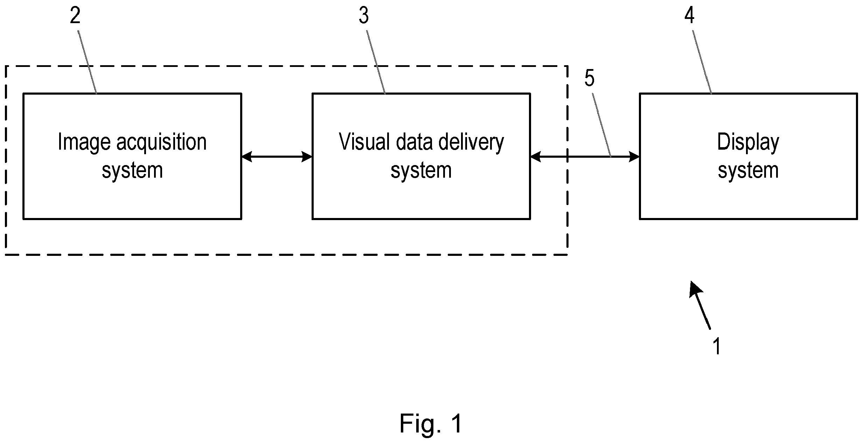

Fig. 1 is a block diagram of an imaging system 1 in which the techniques described herein can be applied. The imaging system 1 comprises an image acquisition system (or subsystem) 2, a visual data delivery system (or subsystem) 3 and a display system (or subsystem) 4. The visual data delivery system 3 provides a sequence of images to the display system 4 via a connection 5, and the display system 4 displays the sequence of images. Alternatively, the visual data delivery system 3 can provide image data to the display system 4 via connection 5, and the display system 4 can reconstruct the sequence of images from the image data, and display the sequence of images.

The image acquisition system 2 is used to obtain the 3D image data, and therefore the image acquisition system 2 comprises one or more probes, scanners or other sensors that are used to obtain 3D image data of a body or part of a body. The body can be the human body or an animal body, or an object. The part of the body may be any of a limb, head, an internal organ (such as heart, lungs, bladder, kidneys, liver, etc.), torso or abdomen (e.g. including the internal organs in those body parts). The 3D image data is a set of data representing images of a 3D volume over time. The image acquisition system 2 may use ultrasound to acquire the 3D image data, or any other suitable technology, such as real-time 3D magnetic resonance (MR). The visual data delivery system 3 processes the acquired 3D image data. The visual data delivery system 3 may process the 3D image data as it is acquired, i.e. the 3D image data is processed in real-time, or in as near real-time as possible.

As noted above, it is undesirable, or not possible, to transfer or stream the 3D image data or 3D images derived from the 3D image data to the display system 4 via the connection 5. Therefore, according to the techniques described herein, the visual data delivery system 3 processes the 3D image data - which comprises a sequence of 3D images of a body - to generate 2D image data which represents a sequence of 2D images of the body. The 2D images are images of the body in a 2D image plane through the 3D volume. The 2D image data is represented by a significantly smaller amount of data than the sequence of 3D images from which the 2D image data is determined, and are more suitable for transfer or streaming via the connection 5. The 2D image data may be a sequence of 2D images (frames of a video sequence), e.g. a 2D video stream, or the 2D image data can be data that enables the display system 4 to reconstruct a sequence of 2D images (frames). For example, the 2D image data can comprise a first 2D image, i.e. a frame of a 2D video sequence, and data indicating how a subsequent image/frame of the video sequence differs from the first 2D image. In this way the display system 4 can reconstruct the next 2D image in the sequence after the first 2D image from the first 2D image and the 2D image data. Further 2D image data can indicate how the next image/frame differs from the reconstructed 2D image. This technique can be referred to as a motion vector field-based approach. Those skilled in the art will be aware of other ways in which information for a sequence of 2D images can be conveyed to a display system 4 in a data-efficient manner, and in which the display system 4 can reconstruct a sequence of 2D images from 2D image data.

The 2D image data is streamed or sent to the display system 4 to enable the display of the sequence of 2D images to the user of the display system 4, for example using a display screen or monitor. The display system 4 enables the user to input a required rotation and/or translation of the 2D image plane in the 3D images of the body, and the user input or a signal representing the same is sent to the visual data delivery system 3.

The visual data delivery system 3 processes the 3D image data according to the requested rotation and/or translation of the 2D image plane to generate 2D image data according to the required 2D image plane, and this 2D image data is sent to the display system 4 for display to the user. Thus, the user of the display system 4 is able to enact a 3D image interaction and to observe the result of the interaction in the displayed 2D sequence without having direct access to the actual 3D image data itself.

In some embodiments, the visual data delivery system 3 can determine so-called 'replacement data' from the 3D image data that can be a 3D representation of the content of the 3D image data (or part of the content), but with the replacement data having a significantly lower amount of data than the corresponding 3D image data, and this replacement data is sent to the display system 4. The replacement data may be in the form of a low-resolution 3D model, such as a mesh model, a segmentation model, and a triangular mesh model. The 3D representation is determined from the replacement data and is displayed to the user of the display system 4. The user can indicate the required rotation and/or translation of the 2D image plane using the displayed 3D representation, and the data representing this user input is sent to the visual data delivery system 3 for execution on the 3D image data. The data representing the user input can be in the form of a rotation matrix, a translation vector related to a significant point in the mesh model (e.g. a center of gravity of the mesh model).

Thus, the visual data delivery system 3 can send data to facilitate a 3D interaction at the display system 4, i.e. not the 3D image data itself, but replacement data of reduced data amount, e.g. reflecting the contents of the 3D image data, such as a 3D segmentation mesh of the heart. The exchange of the replacement data may not necessarily be continuous or in real-time (although if the replacement data is sent in real-time it can represent the actual shape/state of the body or body part, e.g. the deformation of the heart during a heart beat), and there may not necessarily be a new exchange of replacement data for each new interaction. Alternatively, the data to facilitate the 3D interaction at the display system 4 can be an indication of the type of body or body part in the 3D image data, and the display system 4 can display a predetermined model of the body or body part, and the user can interact with this predetermined model to indicate the required rotation and/or translation.

The display system 4 receives the 2D image data (e.g. a sequence of 2D images or data that enables the display system 4 to construct a sequence of 2D images) that is based on the 3D image data. The 2D image data may be a (e.g. continuous) data stream that is based on the 3D image data and may include additional information to overlay on the 2D images of the body or body part, such as measurements, labels, color-coding and so on.

Following the input from the user, the display system 4 sends data representing or indicating the required rotation or translation to the visual data delivery system 3 so that the visual data delivery system 3 can determine or calculate the updated 2D visualization of the body or body part. Thus, the rotation or translation can be effected without the exchange of 3D image data between the visual data delivery system 3 and the display system 4. Instead the exchanged data for the manipulation (rotation and/or translation) of the 3D image data can be, for example, a parameter set for the calculation of the 2D visualization such as a homogenous transfer matrix, or a translation vector.

With the above approach, the computing power required by the display system 4 is much lower than the computing power required by the visual data delivery system 3, while still enabling users of the display system 4 to view and manipulate 2D images in real-time or near real-time. This can enable the display system 4 to be embodied as an electronic device such as a desktop computer, a laptop, a patient monitoring device, a patient monitor, a bedside monitor, a tablet computer, a smartphone, a smartwatch, etc.

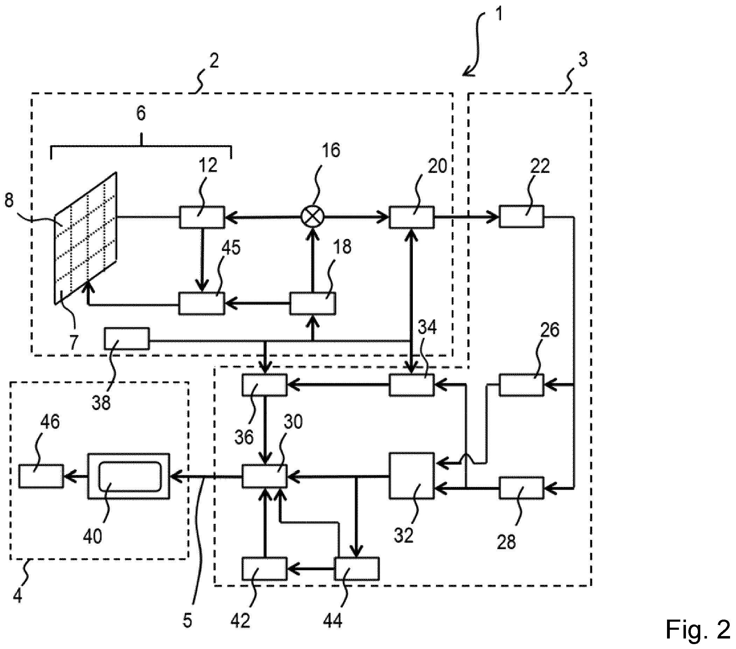

Fig. 2 is a block diagram of an ultrasound-based embodiment of the system of Fig. 1. Each of the image acquisition system 2, visual data delivery system 3 and display system 4 of the ultrasound imaging system 1 are shown in more detail.

The image acquisition system 2 comprises an array transducer probe 6, a transducer array 7, a two-dimensional array of transducers 8, a microbeamformer 12, a switch 16, a transducer controller 18, a main beamformer 20, a user interface or control panel 38 and a DC bias control 45.

The visual data delivery system 3 comprises a signal processor 22, a B mode processor 26, a Doppler processor 28, an image processor 30, a scan converter 32, a quantification processor 34, a graphics processor 36, the control panel 38 (or a separate control panel to the control panel 38 in the image acquisition system 2), a volume renderer 42 and a multi-planar reformatter 44.

The display system 4 comprises a display screen 40 and a control panel or user interface 46.

The array transducer probe 6 has a transducer array 7 for transmitting ultrasound waves and receiving echo information. The transducer array 7 may comprise CMUT transducers; piezoelectric transducers, formed of materials such as PZT or PVDF; or any other suitable transducer technology. In this example, the transducer array 7 is a two-dimensional array of transducers 8 capable of scanning a three-dimensional volume of a region of interest.

The transducer array 7 is coupled to a microbeamformer 12 which controls reception of signals by the transducer elements. Microbeamformers are capable of at least partial beamforming of the signals received by sub-arrays, generally referred to as "groups" or "patches", of transducers as described in US Patents 5,997,479 (Savord et al.), 6,013,032 (Savord), and 6,623,432 (Powers et al.).

It should be noted that the microbeamformer is entirely optional. Further, the system 1 includes a transmit/receive (T/R) switch 16, which the microbeamformer 12 can be coupled to and which switches the array between transmission and reception modes, and protects the main beamformer 20 from high energy transmit signals in the case where a microbeamformer is not used and the transducer array is operated directly by the main system beamformer. The transmission of ultrasound beams from the transducer array 7 is directed by a transducer controller 18 coupled to the microbeamformer by the T/R switch 16 and a main transmission beamformer (not shown), which can receive input from the user's operation of the user interface or control panel 38. The controller 18 can include transmission circuitry arranged to drive the transducer elements of the array 7 (either directly or via a microbeamformer) during the transmission mode.

In a typical line-by-line imaging sequence, the beamforming system within the probe may operate as follows. During transmission, the beamformer (which may be the microbeamformer or the main system beamformer depending upon the implementation) activates the transducer array, or a sub-aperture of the transducer array. The sub-aperture may be a one-dimensional line of transducers or a two-dimensional patch of transducers within the larger array. In transmit mode, the focusing and steering of the ultrasound beam generated by the array, or a sub-aperture of the array, are controlled as described below.

Upon receiving the backscattered echo signals from the subject, the received signals undergo receive beamforming (as described below), in order to align the received signals, and, in the case where a sub-aperture is being used, the sub-aperture is then shifted, for example by one transducer element. The shifted sub-aperture is then activated and the process repeated until all of the transducer elements of the transducer array have been activated.

For each line (or sub-aperture), the total received signal, used to form an associated line of the final ultrasound image, will be a sum of the voltage signals measured by the transducer elements of the given sub-aperture during the receive period. The resulting line signals, following the beamforming process below, are typically referred to as radio frequency (RF) data. Each line signal (RF data set) generated by the various sub-apertures then undergoes additional processing to generate the lines of the final ultrasound image. The change in amplitude of the line signal with time will contribute to the change in brightness of the ultrasound image with depth, wherein a high amplitude peak will correspond to a bright pixel (or collection of pixels) in the final image. A peak appearing near the beginning of the line signal will represent an echo from a shallow structure, whereas peaks appearing progressively later in the line signal will represent echoes from structures at increasing depths within the subject.

One of the functions controlled by the transducer controller 18 is the direction in which beams are steered and focused. Beams may be steered straight ahead from (orthogonal to) the transducer array, or at different angles for a wider field of view. The steering and focusing of the transmit beam may be controlled as a function of transducer element actuation time.

Two methods can be distinguished in general ultrasound data acquisition: plane wave imaging and "beam steered" imaging. The two methods are distinguished by a presence of the beamforming in the transmission ("beam steered" imaging) and/or reception modes (plane wave imaging and "beam steered" imaging).

Looking first to the focusing function, by activating all of the transducer elements at the same time, the transducer array generates a plane wave that diverges as it travels through the subject. In this case, the beam of ultrasonic waves remains unfocused. By introducing a position dependent time delay to the activation of the transducers, it is possible to cause the wave front of the beam to converge at a desired point, referred to as the focal zone. The focal zone is defined as the point at which the lateral beam width is less than half the transmit beam width. In this way, the lateral resolution of the final ultrasound image is improved.

For example, if the time delay causes the transducer elements to activate in a series, beginning with the outermost elements and finishing at the central element(s) of the transducer array, a focal zone would be formed at a given distance away from the probe, in line with the central element(s). The distance of the focal zone from the probe will vary depending on the time delay between each subsequent round of transducer element activations. After the beam passes the focal zone, it will begin to diverge, forming the far field imaging region. It should be noted that for focal zones located close to the transducer array, the ultrasound beam will diverge quickly in the far field leading to beam width artifacts in the final image. Typically, the near field, located between the transducer array and the focal zone, shows little detail due to the large overlap in ultrasound beams. Thus, varying the location of the focal zone can lead to significant changes in the quality of the final image.

It should be noted that, in transmit mode, only one focus may be defined unless the ultrasound image is divided into multiple focal zones (each of which may have a different transmit focus).

In addition, upon receiving the echo signals from within the subject, it is possible to perform the inverse of the above described process in order to perform receive focusing. In other words, the incoming signals may be received by the transducer elements and subject to an electronic time delay before being passed into the system for signal processing. The simplest example of this is referred to as delay-and-sum beamforming. It is possible to dynamically adjust the receive focusing of the transducer array as a function of time.

Looking now to the function of beam steering, through the correct application of time delays to the transducer elements it is possible to impart a desired angle on the ultrasound beam as it leaves the transducer array. For example, by activating a transducer on a first side of the transducer array followed by the remaining transducers in a sequence ending at the opposite side of the array, the wave front of the beam will be angled toward the second side. The size of the steering angle relative to the normal of the transducer array is dependent on the size of the time delay between subsequent transducer element activations.

Further, it is possible to focus a steered beam, wherein the total time delay applied to each transducer element is a sum of both the focusing and steering time delays. In this case, the transducer array is referred to as a phased array.

In case of the CMUT transducers, which require a DC bias voltage for their activation, the transducer controller 18 can be coupled to control a DC bias control 45 for the transducer array. The DC bias control 45 sets DC bias voltage(s) that are applied to the CMUT transducer elements.

For each transducer element of the transducer array, analog ultrasound signals, typically referred to as channel data, enter the system by way of the reception channel. In the reception channel, partially beamformed signals are produced from the channel data by the microbeamformer 12 and are then passed to a main receive beamformer 20 where the partially beamformed signals from individual patches of transducers are combined into a fully beamformed signal, referred to as radio frequency (RF) data. The beamforming performed at each stage may be carried out as described above, or may include additional functions. For example, the main beamformer 20 may have 128 channels, each of which receives a partially beamformed signal from a patch of dozens or hundreds of transducer elements. In this way, the signals received by thousands of transducers of a transducer array can contribute efficiently to a single beamformed signal.

The beamformed reception signals are coupled to a signal processor 22. The signal processor 22 can process the received echo signals in various ways, such as: band-pass filtering; decimation; I and Q component separation; and harmonic signal separation, which acts to separate linear and nonlinear signals so as to enable the identification of nonlinear (higher harmonics of the fundamental frequency) echo signals returned from tissue and micro-bubbles. The signal processor may also perform additional signal enhancement such as speckle reduction, signal compounding, and noise elimination. The band-pass filter in the signal processor can be a tracking filter, with its pass band sliding from a higher frequency band to a lower frequency band as echo signals are received from increasing depths, thereby rejecting noise at higher frequencies from greater depths that is typically devoid of anatomical information.

The beamformers for transmission and for reception are implemented in different hardware and can have different functions. Of course, the receiver beamformer is designed to take into account the characteristics of the transmission beamformer. In Fig. 1 only the receiver beamformers 12, 20 are shown, for simplicity. In the complete system, there will also be a transmission chain with a transmission micro beamformer, and a main transmission beamformer.

The function of the micro beamformer 12 is to provide an initial combination of signals in order to decrease the number of analog signal paths. This is typically performed in the analog domain.

The final beamforming is done in the main beamformer 20 and is typically after digitization.

The transmission and reception channels use the same transducer array 7 which has a fixed frequency band. However, the bandwidth that the transmission pulses occupy can vary depending on the transmission beamforming used. The reception channel can capture the whole transducer bandwidth (which is the classic approach) or, by using bandpass processing, it can extract only the bandwidth that contains the desired information (e.g. the harmonics of the main harmonic).

The RF signals may then be coupled to a B mode (i.e. brightness mode, or 2D imaging mode) processor 26 and a Doppler processor 28. The B mode processor 26 performs amplitude detection on the received ultrasound signal for the imaging of structures in the body, such as organ tissue and blood vessels. In the case of line-by-line imaging, each line (beam) is represented by an associated RF signal, the amplitude of which is used to generate a brightness value to be assigned to a pixel in the B mode image. The exact location of the pixel within the image is determined by the location of the associated amplitude measurement along the RF signal and the line (beam) number of the RF signal. B mode images of such structures may be formed in the harmonic or fundamental image mode, or a combination of both as described in US Pat. 6,283,919 (Roundhill et al.) and US Pat. 6,458,083 (Jago et al.). The Doppler processor 28 processes temporally distinct signals arising from tissue movement and blood flow for the detection of moving substances, such as the flow of blood cells in the image field. The Doppler processor 28 typically includes a wall filter with parameters set to pass or reject echoes returned from selected types of materials in the body.

The structural and motion signals produced by the B mode and Doppler processors are coupled to a scan converter 32 and a multi-planar reformatter 44. The scan converter 32 arranges the echo signals in the spatial relationship from which they were received in a desired image format. In other words, the scan converter acts to convert the RF data from a cylindrical coordinate system to a Cartesian coordinate system appropriate for displaying an ultrasound image on display screen 40. In the case of B mode imaging, the brightness of pixel at a given coordinate is proportional to the amplitude of the RF signal received from that location. For instance, the scan converter may arrange the echo signal into a two-dimensional (2D) sector-shaped format, or a pyramidal three-dimensional (3D) image. The scan converter can overlay a B mode structural image with colors corresponding to motion at points in the image field, where the Doppler-estimated velocities to produce a given color. The combined B mode structural image and color Doppler image depicts the motion of tissue and blood flow within the structural image field. The multi-planar reformatter will convert echoes that are received from points in a common plane in a volumetric region of the body into an ultrasound image of that plane, as described in US Pat. 6,443,896 (Detmer). A volume renderer 42 converts the echo signals of a 3D data set into a projected 3D image as viewed from a given reference point as described in US Pat. 6,530,885 (Entrekin et al.).

The 2D or 3D images are coupled from the scan converter 32, multi-planar reformatter 44, and volume renderer 42 to an image processor 30 for further enhancement, buffering and temporary storage for display on display screen 40 via connection 5. The imaging processor may be adapted to remove certain imaging artifacts from the final ultrasound image, such as: acoustic shadowing, for example caused by a strong attenuator or refraction; posterior enhancement, for example caused by a weak attenuator; reverberation artifacts, for example where highly reflective tissue interfaces are located in close proximity; and so on. In addition, the image processor may be adapted to handle certain speckle reduction functions, in order to improve the contrast of the final ultrasound image.

In addition to being used for imaging, the blood flow values produced by the Doppler processor 28 and tissue structure information produced by the B mode processor 26 are coupled to a quantification processor 34. The quantification processor produces measures of different flow conditions such as the volume rate of blood flow in addition to structural measurements such as the sizes of organs and gestational age. The quantification processor may receive input from the user control panel 38, such as the point in the anatomy of an image where a measurement is to be made.

Output data from the quantification processor is coupled to a graphics processor 36 for the reproduction of measurement graphics and values with the image on the display screen 40, and for audio output from a loudspeaker (not shown). The graphics processor 36 can also generate graphic overlays for display with the ultrasound images. These graphic overlays can contain standard identifying information such as patient name, date and time of the image, imaging parameters, and the like. For these purposes the graphics processor receives input from the user interface 38 or user interface 46, such as patient name. The user interface 38 is also coupled to the transmit controller 18 to control the generation of ultrasound signals from the transducer array 7 and hence the images produced by the transducer array and the ultrasound system. The transmit control function of the controller 18 is only one of the functions performed. The controller 18 also takes account of the mode of operation (given by the user) and the corresponding required transmitter configuration and band-pass configuration in the receiver analog to digital converter. The controller 18 can be a state machine with fixed states.

The user interface is also coupled to the multi-planar reformatter 44 for selection and control of the planes of multiple multi-planar reformatted (MPR) images which may be used to perform quantified measures in the image field of the MPR images.

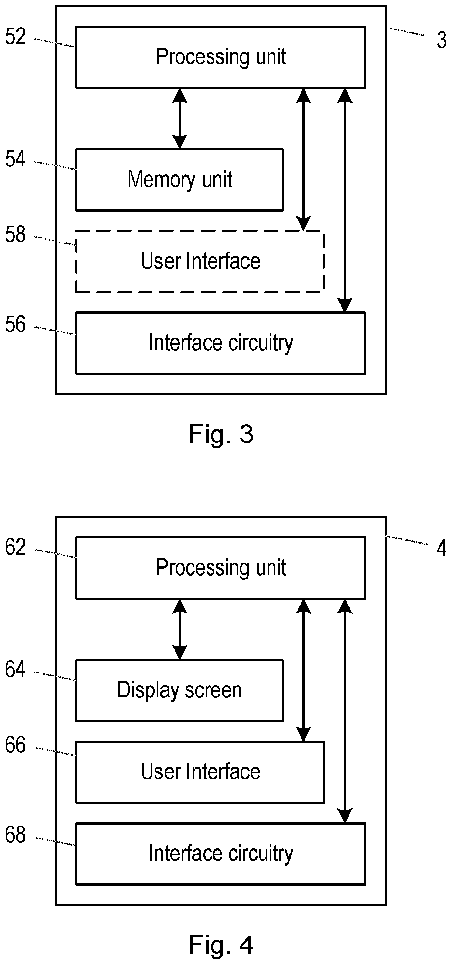

Fig. 3 is a block diagram of a visual data delivery system 3 according to various embodiments.

The visual data delivery system 3 includes a processing unit 52 that controls the operation of the visual data delivery system 3 and that can be configured to execute or perform the methods described herein. The processing unit 52 can be implemented in numerous ways, with software and/or hardware, to perform the various functions described herein. For example, the processing unit 52 can implement the functions of any of the processors described above with respect to Fig. 2. The processing unit 52 may comprise one or more microprocessors or digital signal processors (DSPs) that may be programmed using software or computer program code to perform the required functions and/or to control components of the processing unit 52 to effect the required functions. The processing unit 52 may be implemented as a combination of dedicated hardware to perform some functions (e.g. amplifiers, preamplifiers, analog-to-digital convertors (ADCs) and/or digital-to-analog convertors (DACs)) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), field-programmable gate arrays (FPGAs), hardware for implementing a neural network and/or so-called artificial intelligence (AI) hardware accelerators (i.e. a processor(s) or other hardware specifically designed for AI applications that can be used alongside a main processor).

The processing unit 52 is connected to a memory unit 54 that can store data, information and/or signals for use by the processing unit 52 in controlling the operation of the visual data delivery system 3 and/or in executing or performing the methods described herein. In some implementations the memory unit 54 stores computer-readable code that can be executed by the processing unit 52 so that the processing unit 52 performs one or more functions, including the methods described herein. The memory unit 54 can comprise any type of non-transitory machine-readable medium, such as cache or system memory including volatile and non-volatile computer memory such as random access memory (RAM), static RAM (SRAM), dynamic RAM (DRAM), read-only memory (ROM), programmable ROM (PROM), erasable PROM (EPROM) and electrically erasable PROM (EEPROM), and the memory unit 54 can be implemented in the form of a memory chip, an optical disk (such as a compact disc (CD), a digital versatile disc (DVD) or a Blu-Ray disc), a hard disk, a tape storage solution, or a solid state device, including a memory stick, a solid state drive (SSD), a memory card, etc.

The visual data delivery system 3 also includes interface circuitry 56 for enabling data connection 5 to and/or data exchange with other devices, including, in particular, image acquisition system 2, display system 4, and optionally any other devices such as servers, databases, user devices, etc. The connection may be direct or indirect (e.g. via the Internet), and thus the interface circuitry 56 can enable a connection between the visual data delivery system 3 and display system 4 via a network (such as the Internet), or directly between the visual data delivery system 3 and display system 4, via any desirable wired or wireless communication protocol. For example, the interface circuitry 56 can operate using WiFi, Bluetooth, Zigbee, or any cellular communication protocol. In the case of a wireless connection, the interface circuitry 56 (and thus visual data delivery system 3) may include one or more suitable antennas for transmitting/receiving over a transmission medium (e.g. the air). Alternatively, in the case of a wireless connection, the interface circuitry 56 may include means (e.g. a connector or plug) to enable the interface circuitry 56 to be connected to one or more suitable antennas external to the visual data delivery system 3 for transmitting/receiving over a transmission medium (e.g. the air). The interface circuitry 56 is connected to the processing unit 52 to enable information or data received by the interface circuitry 56 to be provided to the processing unit 52, and/or information or data from the processing unit 52 to be transmitted by the interface circuitry 56.

In some embodiments, the visual data delivery system 3 comprises a user interface 58 that includes one or more components that enables a user of visual data delivery system 3 to input information, data and/or commands into the visual data delivery system 3, and/or enables the visual data delivery system 3 to output information or data to the user of the visual data delivery system 3. The user interface 58 can comprise any suitable input component(s), including but not limited to a keyboard, keypad, one or more buttons, switches or dials, a mouse, a track pad, a touchscreen, a stylus, a camera, a microphone, etc., and the user interface 58 can comprise any suitable output component(s), including but not limited to a display screen, one or more lights or light elements, one or more loudspeakers, a vibrating element, etc. The user interface 58 may correspond to control panel 38 shown in Fig. 2.

The visual data delivery system 3 can be any type of electronic device or computing device. For example, the visual data delivery system 3 can be, or be part of, a laptop, a computer or a server, for example a server in a data centre (also referred to as being 'in the cloud').

It will be appreciated that a practical implementation of a visual data delivery system 3 may include additional components to those shown in Fig. 1. For example, the visual data delivery system 3 may also include components for enabling the visual data delivery system 3 to be connected to a mains power supply.

Fig. 4 is a block diagram of a display system 4 according to various embodiments.

The display system 4 includes a processing unit 62 that controls the operation of the display system 4 and that can be configured to execute or perform the methods described herein. The processing unit 62 can be implemented in numerous ways, with software and/or hardware, to perform the various functions described herein. For example, the processing unit 62 can be implemented according to any of the embodiments and implementations of the processing unit 52 in the visual data delivery system 3.

The display system 4 comprises a display screen 64 for displaying information to a user of the display system 4. The display screen 64 is connected to the processing unit 62, and is controlled by the processing unit 62 to display the required information. In particular the display screen 64 can be used to display a sequence of 2D images of a body, for example a 2D video stream that comprises ultrasound images of the body. The display screen 64 can use any suitable technology to generate a visual image, for example cathode ray tubes (CRT), liquid crystal display (LCD), light emitting diodes (LEDs), organic LEDs (OLEDs), etc.

The display system 4 also comprises a user interface 66 that includes one or more components that enables a user of display system 4 to input information, data and/or commands into the display system 4. The input components can be used by the user to input a required rotation and/or translation of the 2D image plane for the 2D images displayed by the display system 4. The input component(s) can be of any suitable type, including but not limited to a keyboard, keypad, one or more buttons, switches or dials, a mouse, a track pad, a touchscreen (for example integrated with the display screen 64), a stylus, a camera, a microphone, etc. The user interface 66 may correspond to control panel 46 shown in Fig. 2.

In some embodiments, the user interface 66 can include one or more components - in addition to the display screen 64 - that enables the display system 4 to output information or data to the user of the display system 4. Output component(s) of the user interface 66 can comprise, for example, one or more lights or light elements, one or more loudspeakers, a vibrating element, etc.

The display system 4 also includes interface circuitry 68 for enabling data connection 5 to and/or data exchange with other devices, including, in particular, visual data delivery system 3, and optionally any other devices such as servers, databases, user devices, etc. The connection may be direct or indirect (e.g. via the Internet), and thus the interface circuitry 68 can enable a connection between the display system 4 and visual data delivery system 3 via a network (such as the Internet), or directly between the display system 4 and visual data delivery system 3, via any desirable wired or wireless communication protocol. The interface circuitry 68 can be implemented according to any of the embodiments and implementations of the interface circuitry 56 in the visual data delivery system 3.

The display system 4 can be any type of electronic device or computing device. For example, the display system 4 can be, or be part of, a laptop, a computer, a patient monitoring device, such as a bedside patient monitor, a server, a tablet computer, a smartphone, a smartwatch, etc.

It will be appreciated that a practical implementation of a display system 4 may include additional components to those shown in Fig. 1. For example, the display system 4 may include a power supply, and/or include components for enabling the display system 4 to be connected to a mains power supply. Although not shown in Fig. 4, the display system 4 can comprise a memory unit that can store data, information and/or signals for use by the processing unit 62 in controlling the operation of the display system 4 and/or in executing or performing the methods described herein. The memory unit can be implemented according to any of the embodiments and implementations of the memory unit 54 in the visual data delivery system 3.

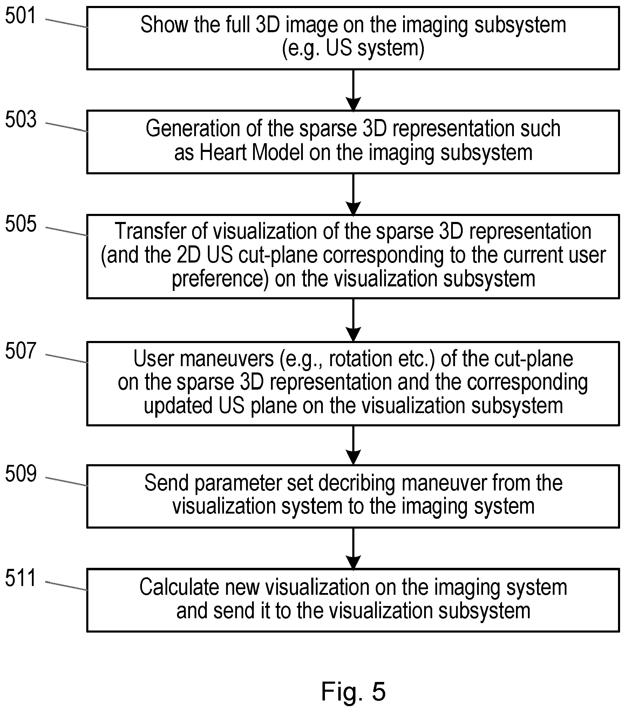

Fig. 5 is a flow chart illustrating a method according to various embodiments. The method includes steps performed by the image acquisition system 2, visual data delivery system 3 and the display system 4. The imaging system 1 to which the method in Fig.5 can be applied can be a patient monitoring system consisting of a combined image acquisition system 2 and visual data delivery system 3 in the form of an ultrasound system such as an EPIQ system from Philips, and a display system 4 in the form of a patient monitor, such as the IntelliVue MX550 patient monitor from Philips. In this exemplary imaging system 1, the image acquisition system 2 and visual data delivery system 3 include a display screen for displaying the 3D image sequence as the 3D images are acquired by the image acquisition system 2. The connection 5 between the visual data delivery system 3 and the display system 4 can be an interface specific to the transfer of US data, or a general communications interface, such as USB or Ethernet. The interface has a limited transfer rate to the patient monitor 4 such that a continuous real-time streaming of the captured 3D volumes to the patient monitor 4 is not possible. In any case, the patient monitor 4 has limited computation power, so the calculation of the visualization of the 3D ultrasound data and any segmentation of the 3D images is also not possible at the patient monitor 4. These calculations need to be performed prior to transfer of the data over the interface to circumvent the need to transfer high bandwidth data to/via the interface.

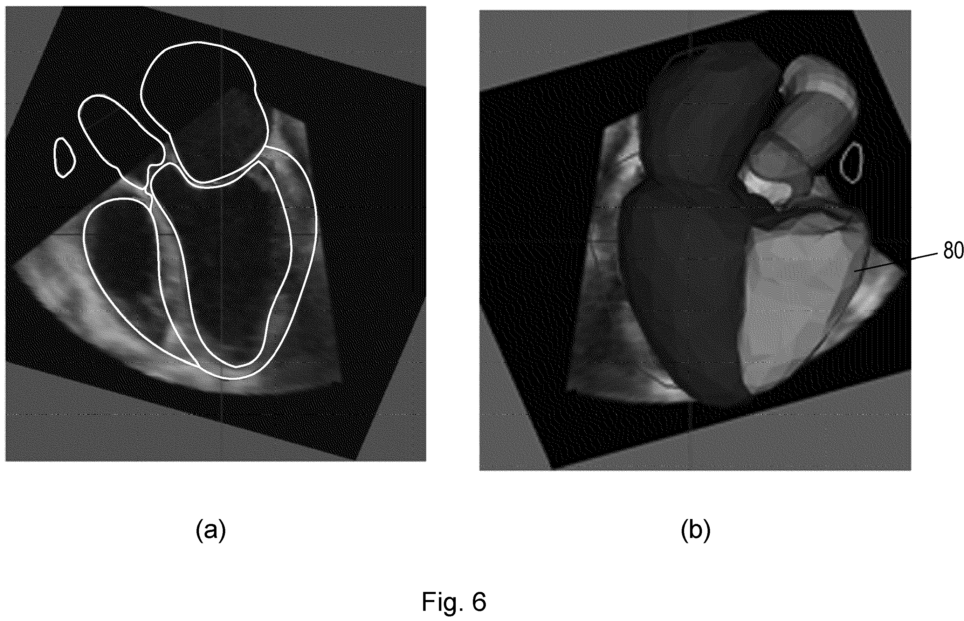

In the method of Fig. 5, 3D ultrasound data is obtained, and a sequence of 2D images through a cut plane of the 3D volume is displayed on the patient monitor/display system 4. The 'cut plane' of the 3D volume is also referred to herein as the '2D image plane'. The sequence of 2D images (2D video) can include other data overlaid on the images, such as contours of the internal organ(s) shown in the image and/or other information. Fig. 6(a) is a 2D ultrasound image representing a cut plane through a 3D ultrasound image of a heart, with heart contours overlaid on the 2D image. Rotation and/or translation of the cut plane through the 3D volume is, in some embodiments, enabled by the user of the patient monitor/display system 4 interacting with a simplified (i.e. low resolution) 3D model 80 or model 80 of the internal organ that is displayed on the patient monitor 4, as shown in Fig. 6(b). The 2D video is updated and streamed continuously or semi-continuously to the patient monitor/display system 4, so the displayed visualization can be a real-time 2D video. Thereby, the amount of data exchanged between the ultrasound system 2, 3 and the patient monitor/display system 4 is significantly lower than the amount of data required to transfer the full 3D volume.

Thus, in step 501 3D ultrasound data is obtained by the image acquisition system 2, and the 3D images can be displayed on the display screen of the image acquisition system 2 or display screen of the visual data delivery system 3. Processing may be performed on the 3D image data to determine useful information of a graphical overlay for the displayed 3D images, such as outlines of the internal organs visible in the 3D images, etc.

In step 503, the visual data delivery system 3 analyses the 3D image data to generate replacement data in the form of a 3D representation/model 80 of the internal organ (e.g. heart) shown in the 3D images.

In step 505, the replacement data for the 3D representation 80 (e.g. 3D heart mesh) is sent to the patient monitor/display system 4, and a sequence of 2D images corresponding to a current position of a cut plane (2D image plane) determined from the 3D image data is also determined and sent to the patient monitor 4. The sequence of 2D images may also include data overlaid on the 2D images, or data that the patient monitor 4 is to itself overlay on the 2D images.

The resulting visualization shown on the display screen 40 of the patient monitor 4 is therefore a sequence of 2D images instead of a sequence of 3D images, optionally with organ contour information and a 3D representation 80 of the internal organ, for example as shown in Fig. 6(a) and (b).

In step 507, the user of the patient monitor 4 is able to interact with the 3D representation 80 and indicate a rotation and/or translation of the cut plane in the 3D volume. This interaction is communicated to the visual data delivery system 3 in step 509, so that the visual data delivery system 3 can adjust the 2D image plane and generate 2D video at the new 2D image plane position (step 511). The new 2D video is sent to the patient monitor 4.

For example, in step 507 the desired 3D user interaction can be the change of the heart's orientation in the displayed 2D images. Conventionally, this is a 3D user interaction that has to be performed on the 3D ultrasound data, but such data is not available at the patient monitor. Thus, to perform the 3D interaction on the (not displayed) 3D ultrasound data, the user interacts with replacement data (e.g. a 3D mesh 80) that allows the user to visualise how the 2D view of the 3D volume will be changed. Preferably the replacement data is also a 3D data set, such as a 3D model 80 or 3D mesh 80, but the replacement data is represented by a significantly smaller amount of data than the 3D image data. In the embodiment shown in Fig. 6(b), the replacement data representing the 3D ultrasound volume is a (heart) mesh (e.g. a triangular mesh) that gives segmented organ contours extracted from the 3D ultrasound volume. Techniques for deriving such replacement data are described in "Automatic Model-based Segmentation of the Heart in CT Images" (by O. Ecabert, J. Peters, H. Schramm, C. Lorenz, J. von Berg, M. J. Walker, M. Vembar, M. E. Olszewski, K. Subramanyan, G. Lavi, J. Weese, in IEEE Transactions on Medical Imaging 2008, 27(9), 1189-1201), and alternatively deep learning-based segmentation methods can be used.

Therefore, there is a link between the replacement data (e.g. mesh) and the actual 3D ultrasound data, and the amount of data transferred via the connection 5 is significantly reduced compared to transferring the full 3D image data. As an example, a 3D triangular mesh 80 has *x* vertices with 3 coordinates and *y* triangles with 3 vertex indices. The amount of data required to represent the 3D triangular mesh 80 is 3(*y* + *x*) * 32 bits, whereas a 3D volume requires 3*n* * *m* * *k* * 32 bits of data, where *n, m* and *k* are the dimensions of the 3D volume. Exemplary segmentation meshes may comprise several hundred or several thousand vertices.

Depending on the desired 3D interaction to be performed in step 507, the mesh or other 3D model 80 should be a reasonably accurate depiction of the internal organ or body part. In case of a cut plane adjustment, the mesh or other 3D model 80 does not necessarily need to represent the current state of the internal organ or body part. For example, it is not necessary for the 3D model 80 to replicate the beating of the heart in real-time, or at all. Therefore, the transmission or transfer of the replacement data in step 505 can be performed once, or only occasionally, e.g. every few seconds. Moreover, the replacement data for the 3D model 80 does not need to be transmitted to the patient monitor 4 while the user is interacting with the displayed 3D model 80. In some embodiments, step 505 can comprise a single transfer of the replacement data representing the 3D model or mesh 80, and the replacement data for the model or mesh 80 is stored at the patient monitor 4. In other embodiments, step 505 can comprise continuously transferring the replacement data representing the 3D model or mesh 80 to the patient monitor 4 with the sequence of 2D images. Both embodiments are possible due to the low amount of data required to represent a mesh 80 in comparison to the amount of data required to represent a 3D image volume.

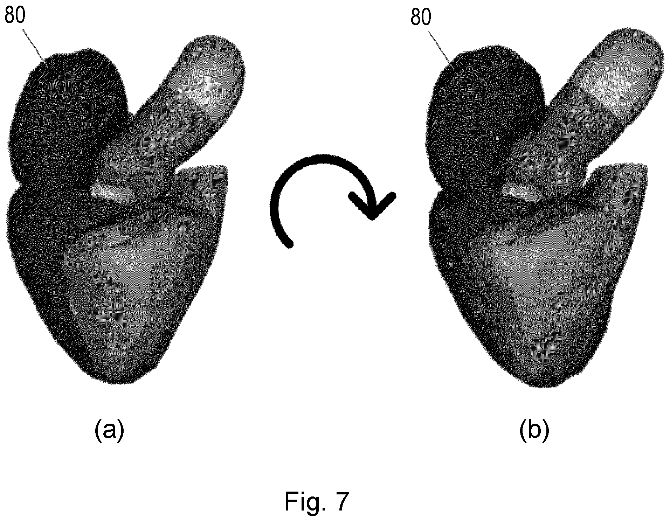

The patient monitor 4 can overlay the 3D mesh (e.g. the heart mesh) 80 on the displayed 2D images, for example as shown in Fig. 6(b). Using a suitable input component at the patient monitor 4, e.g. a touchscreen, mouse, keyboard, stylus, etc., in step 507 the user can 'grab' and 'pull' the mesh contours of the 2D video and manipulate the orientation of the 3D mesh 80 by rotating and then releasing it. Fig. 7(b) represents a rotation of a 3D model 80 representing the heart with respect to the 3D model 80 shown in Fig. 7(a). Then, information on the new orientation of the mesh 80 can be sent to the visual data delivery system 3 via the connection 5 in step 509. The information for the new orientation of the mesh 80 indicates how the 2D image plane is to be adjusted in the 3D image data by the visual data delivery system 3. This information is referred to as a '2D image plane adjustment indication'.

The position/orientation of the 3D model (which in different embodiments can be represented as an absolute position in a reference frame, a position represented in an image coordinate system, and a relative position/orientation of the model with respect to the last/current position/orientation) can be expressed as a parameter set. The 2D image plane adjustment indication that is sent by the patient monitor 4 to the visual data delivery system 3 in step 509 can comprise this parameter set.

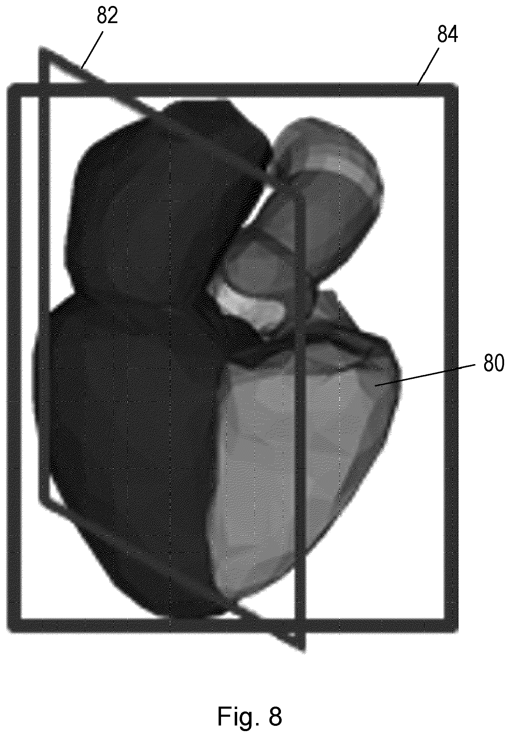

In an alternative embodiment, rather than rotate and/or translate the 3D model 80 of the internal organ or body part, the user can instead manipulate a graphical representation of the cut plane through the 3D model 80. Fig. 8 shows a representation of the 2D cut plane 82 in an initial position/orientation through the 3D model 80. The user can 'grab' and 'pull' the 2D cut plane representation 82 and manipulate the orientation and/or position of the cut plane with respect to the 3D mesh 80. 2D cut plane 84 shows the position and orientation of the 2D cut plane after the manipulation. As before, information on the new position and/or orientation of the cut plane is sent to the visual data delivery system 3 via the connection 5 in step 509. Again, the information sent to the visual data delivery system 3 is referred to as a '2D image plane adjustment indication'. This alternative embodiment is referred to as 'multiple plane adjustment'.

Whichever way the user interacts with the patient monitor 4 to indicate the change in the 2D image plane and the format of the 2D image plane adjustment indication, the visual data delivery system 3 generates a new sequence of 2D images from the 3D image data in step 511, and this new 2D video is sent to the patient monitor 4 for display to the user. This results in the user being able to indirectly interact with the 3D image data to achieve the same interaction result, i.e. the display of 2D video with a desired position of the cut plane in the 3D image data, as performing the interaction on the 3D image data itself.

In alternative embodiments of step 503, rather than generate a 3D representation directly from the 3D image data, the visual data delivery system 3 can identify the internal organ or body part that is represented in the 3D image data, and a generic 3D model (i.e. not patient-specific) of the internal organ or body part can be displayed at the patient monitor 4 for manipulation by the user. In these embodiments, the visual data delivery system 3 can send replacement data in the form of data for the appropriate generic model to the patient monitor 4, or, if the patient monitor 4 has the generic 3D models stored in a memory unit, the visual data delivery system 3 can send an indication to the patient monitor 4 indicating which generic 3D model should be used. This indication can be in the form of text or a tag/label. In the latter case, the visual data delivery system 3 can automatically recognise the internal organ or body part in the 3D volume (for example using automated real-time image analysis or AI-based approaches known in the art), and send an indication of the recognised internal organ or body part to the patient monitor 4. This embodiment has the benefit that the amount of data transferred to the patient monitor 4 via the connection 5 is further reduced compared to transferring the sequence of 2D images and the replacement data representing a 3D model.

In another alternative embodiment, rather than generate a 3D representation directly from the 3D image data, or automatically identify the internal organ or body part that is represented in the 3D image data, the user of the patient monitor 4 can manually interpret the displayed 2D video to identify the internal organ or body part, and select an appropriate generic 3D model to display, for example from a drop-down list presented by the patient monitor 4. Thus, if the user is scanning the heart of a patient, the user can select a heart model from a list of models available at the patient monitor 4, and the patient monitor 4 can display a generic 3D model.

In any embodiment that displays a patient-specific or generic 3D model, the 3D model can be displayed with one or more user interface (UI) elements to enable a user to select a type of manipulation to apply to the 2D image plane. For example, the UI can enable the user to select one or more predetermined cut-planes (i.e. cut planes having a predetermined position and orientation with respect to the internal organ or body part), rotated visualizations, reduced 3D volume subsets, etc.

In some embodiments, the patient monitor 4 and/or visual data delivery system 3 can store information indicating particular positions of the 2D image plane that have been used previously, and/or standard views (such as a 4-chamber view of the heart) that can be used for tracking a segment of the anatomy/body. The availability of previously-used or standard views, or availability of a tracked segment, can be determined by the visual data delivery system 3 and communicated to the patient monitor 4 via the connection 5. The user of the patient monitor 4 may then have the option of selecting that previously-used view, standard view or tracked segment. In that case the 2D image plane adjustment indication can be the selection of that previously-used view, standard view or tracked segment. In a more complex example relating to the heart, the visual data delivery system 3 can track the pose of the maximum diameter of the inferior vena cava, and communicate the availability of that visualization to the user of the patient monitor 4. The user can select it, e.g. via a button push, and the request for that visualization preset can be communicated to the visual data delivery system 3. In an even more complex example, a user of the patient monitor 4 can manually select a desired 2D image plane orientation/position for the 3D image data, and the visual data delivery system 3 can store information on the manually selected plane orientation(s)/position(s) for subsequent selection and use by the user.

In some embodiments, the visual data delivery system 3 can provide multiple 2D image sequences to the patient monitor 4. For example, the visual data delivery system 3 can provide a first 2D image sequence, e.g. according to a default orientation and/or position for the 2D image plane, and a second 2D image sequence, e.g. according to the user-selected position and/or orientation of the 2D image plane.

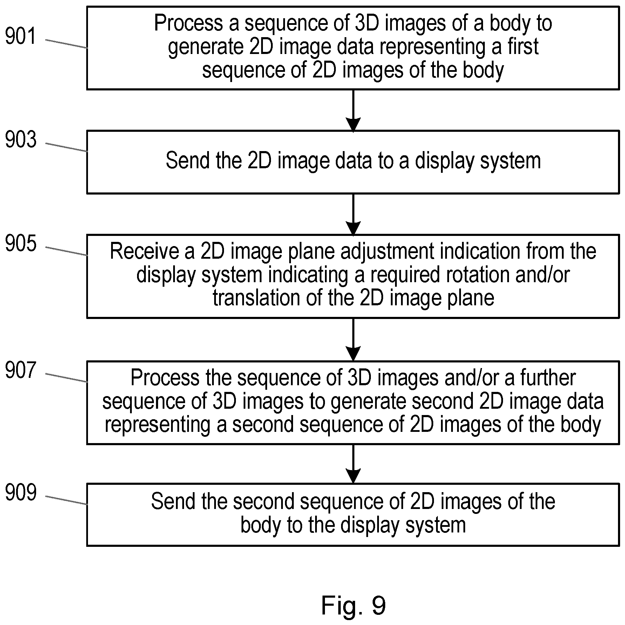

The flow chart in Fig. 9 illustrates an exemplary method performed by the visual data delivery system 3 according to the techniques described herein. One or more of the steps of the method can be performed by the processing unit 52 in the visual data delivery system 3, in conjunction with the interface circuitry 56, and memory unit 14, as appropriate. The processing unit 52 may perform the one or more steps in response to executing computer program code, that can be stored on a computer readable medium, such as, for example, the memory unit 54.

In step 901, the visual data delivery system 3 processes a sequence of 3D images of a body to generate first 2D image data. The 3D images may be 3D ultrasound images. The 2D image data represents a first sequence of 2D images of the body, with the 2D images being images of the body in a 2D image plane through the 3D images. The amount of data representing the first 2D image data is less than an amount of data representing the 3D images from which the first 2D image data is generated. In some embodiments, the 2D image data is the first sequence of 2D images, i.e. the 2D image data comprises image data for each 2D image in the sequence. In other embodiments, the 2D image data can be in a form that enables a display system 4 to reconstruct the sequence of 2D images from the 2D image data.

In step 903, the visual data delivery system 3 sends the first 2D image data to display system 4, so that the display system 4 can display of the first sequence of 2D images of the body. In step 905, the visual data delivery system 3 receives a 2D image plane adjustment indication from the display system 4. The 2D image plane adjustment indication indicates a required rotation and/or translation of the 2D image plane in the 3D images.

In step 907, the visual data delivery system 3 processes the sequence of 3D images and/or a further sequence of 3D images to generate second 2D image data. The second 2D image data can represent or be a second sequence of 2D images of the body. The 2D images in the second sequence of 2D images are 2D images of the body in the rotated and/or translated 2D image plane. The further sequence of 3D images may be newly-obtained 3D images, for example where the method of Fig. 9 is being performed in real-time as the 3D images are being obtained.

In step 909, the second 2D image data is sent to the display system 4 for display of the second sequence of 2D images of the body.

In some embodiments, at or around steps 901 and/or 903, the visual data delivery system 3 can generate one or more 3D models 80 representing the body or a part of the body from the sequence of 3D images. The visual data delivery system 3 can send the one or more 3D models to the display system 4. The amount of data representing a 3D model 80 is less than an amount of data representing the 3D image from which the 3D model is generated.

In alternative embodiments, at or around steps 901 and/or 903, the visual data delivery system 3 can process the sequence of 3D images to identify a type of body or type of body part shown in the sequence of 3D images. For example the visual data delivery system 3 can identify an internal organ shown in the sequence of 3D images. The visual data delivery system 3 can send an indication of the identified type of body or type of body part to the display system 4. Alternatively, the visual data delivery system 3 can send an indication of one or more predetermined 3D models 80 corresponding to the identified type of body or type of body part.

In alternative embodiments, the visual data delivery system 3 can process the sequence of 3D images to identify a type of body or type of body part shown in the sequence of 3D images, and then send an indication of the identified type of body or identified type of body part to the display system 4. In these embodiments, the identified type of body or identified type of body part is associated with a predetermined 3D model 80 stored at the display system 4 corresponding to the identified type of body or identified type of body part.

In the above embodiments, the one or more 3D models may include an indication of a current orientation and/or current position of the 2D image plane with respect to the body. In the above embodiments, the 2D image plane adjustment indication may be a rotation and/or translation of the indication of the 2D image plane in the one or more 3D models (e.g. as shown in Fig. 8), or a rotation and/or translation of the one or more 3D models (e.g. as shown in Fig 7). The 3D model may be any of a mesh model, a segmentation model, and a triangular mesh model. The 3D model may represent an internal organ of the body.

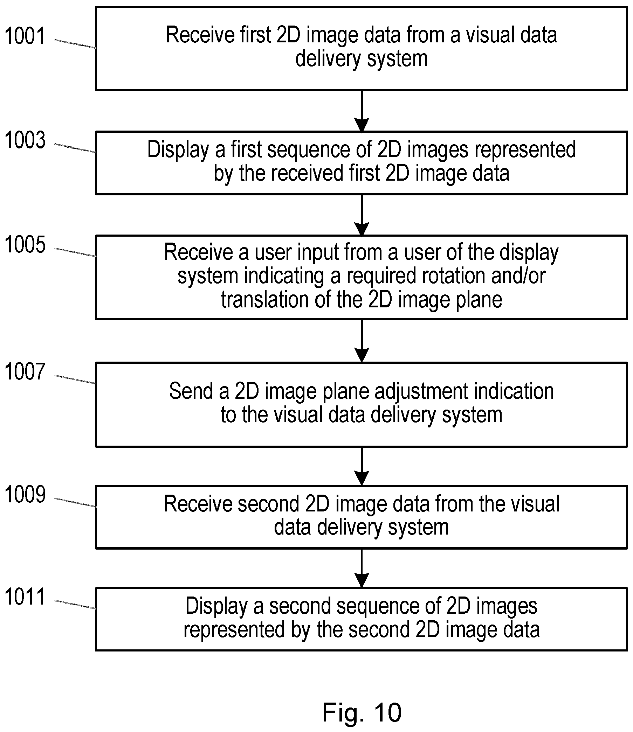

The flow chart in Fig. 10 illustrates an exemplary method performed by the display system 4 according to the techniques described herein. One or more of the steps of the method can be performed by the processing unit 62 in the display system 4, in conjunction with the interface circuitry 68 and a memory unit (if present), as appropriate. The processing unit 62 may perform the one or more steps in response to executing computer program code, that can be stored on a computer readable medium, such as, for example, a memory unit.

In step 1001, the display system 4 receives first 2D image data from a visual data delivery system 3. The first 2D image data represents a first sequence of 2D images of a body. The 2D images are images of the body in a 2D image plane through 3D images of the body. The 2D images can be 2D ultrasound images.

In step 1003, the display system 4 displays the first sequence of 2D images. In some embodiments, the 2D image data is the first sequence of 2D images, i.e. the 2D image data comprises image data for each 2D image in the sequence. In these embodiments, the display system 4 displays the 2D images in the 2D image data. In other embodiments, the 2D image data can be in a form that enables the display system 4 to reconstruct the sequence of 2D images from the 2D image data. In these embodiments, in step 1003 the display system 4 reconstructs the sequence of 2D images from the 2D image data and displays the reconstructed sequence of 2D images.

In step 1005 a user input is received from a user of the display system 4. The user input indicates a required rotation and/or translation of the 2D image plane.

In step 1007 a 2D image plane adjustment indication is sent to the visual data delivery system 3. The 2D image plane adjustment indication indicates the required rotation and/or translation of the 2D image plane.

In step 1009 second 2D image data is received from the visual data delivery system 3. The second 2D image data represents a second sequence of 2D images of the body. The second sequence of 2D images are images of the body in the rotated and/or translated 2D image plane.

In step 1011, the display system 4 displays the second sequence of 2D images.

In some embodiments, at or around steps 1001 and/or 1003, the display system 4 can receive one or more 3D models for the body or a part of the body shown in the first sequence of 2D images from the visual data delivery system 3.

In alternative embodiments, at or around steps 1001 and/or 1003, the display system 4 can receive an indication of the type of body or type of body part shown in the first sequence of 2D images. The indication is received from the visual data delivery system 3. The type of body or type of body part corresponds to a predetermined 3D model for the type of body or type of body part stored at the display system 4.

In alternative embodiments, at or around steps 1001 and/or 1003, the display system 4 can receive an indication of one or more predetermined 3D models corresponding to a type of body or type of body part shown in the first sequence of 2D images. The indication can be received from the visual data delivery system 3. The one or more predetermined 3D models are stored at the display system 4.

In the above embodiments, the display system 4 can display the one or more 3D models. The 3D model(s) may be shown separately to the sequence of 2D images, or the 3D model(s) can be overlaid on the displayed sequence of 2D images.

In the above embodiments, the displayed 3D model(s) may include an indication of a current orientation and/or current position of the 2D image plane with respect to the body. In the above embodiments, the 2D image plane adjustment indication may be a rotation and/or translation of the indication of the 2D image plane in the one or more 3D models (e.g. as shown in Fig. 8), or a rotation and/or translation of the one or more 3D models (e.g. as shown in Fig 7). The 3D model may be any of a mesh model, a segmentation model, and a triangular mesh model. The 3D model may represent an internal organ of the body.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method of operating a visual data delivery system (3), the method comprising:
processing (901) a sequence of 3-dimensional, 3D, images of a body to generate first 2-dimensional, 2D, image data representing a first sequence of 2D images of the body, wherein the 2D images are images of the body in a 2D image plane through the 3D images, and wherein an amount of data representing the first 2D image data is less than an amount of data representing the 3D images from which the first 2D image data is generated;
sending (903) the first 2D image data to a display system (4) for display of the first sequence of 2D images of the body by the display system (4);
receiving (905) a 2D image plane adjustment indication from the display system (4), wherein the 2D image plane adjustment indication indicates a required rotation and/or translation of the 2D image plane;
processing (907) the sequence of 3D images and/or a further sequence of 3D images to generate second 2D image data representing a second sequence of 2D images of the body, wherein the 2D images in the second sequence of 2D images are images of the body in the rotated and/or translated 2D image plane; and
sending (909) the second 2D image data to the display system (4) for display of the second sequence of 2D images of the body by the display system (4).

2. A method as claimed in claim 1, wherein the method further comprises:
generating one or more 3D models representing the body or a part of the body from the sequence of 3D images; and
sending the one or more 3D models to the display system (4).

3. A method as claimed in claim 1, wherein the method further comprises:
processing the sequence of 3D images to identify a type of body or type of body part shown in the sequence of 3D images; and
sending an indication of the identified type of body or type of body part, or an indication of one or more predetermined 3D models corresponding to the identified type of body or type of body part, to the display system (4).

4. A method as claimed in claim 1, wherein the method further comprises:
processing the sequence of 3D images to identify a type of body or type of body part shown in the sequence of 3D images; and
sending an indication of the identified type of body or identified type of body part to the display system (4), wherein the identified type of body or identified type of body part is associated with a predetermined 3D model corresponding to the identified type of body or identified type of body part stored at the display system (4).

5. A method as claimed in any of claims 2-4, wherein the one or more 3D models comprises an indication of a current orientation and/or current position of the 2D image plane with respect to the body, and wherein the received 2D image plane adjustment indication is a rotation and/or translation of the indication of the 2D image plane in the one or more 3D models, or a rotation and/or translation of the one or more 3D models.

6. A computer-implemented method of operating a display system (4), the method comprising:
receiving first 2-dimensional, 2D, image data representing a first sequence of 2D images of a body from a visual data delivery system (3), wherein the 2D images are images of the body in a 2D image plane through 3-dimensional, 3D, images of the body;
displaying the first sequence of 2D images;
receiving a user input from a user of the display system, wherein the user input indicates a required rotation and/or translation of the 2D image plane;
sending a 2D image plane adjustment indication to the visual data delivery system, wherein the 2D image plane adjustment indication indicates the required rotation and/or translation of the 2D image plane;
receiving second 2D image data representing a second sequence of 2D images of the body from the visual data delivery system (3), wherein the second sequence of 2D images are images of the body in the rotated and/or translated 2D image plane; and
displaying the second sequence of 2D images.

7. A method as claimed in claim 6, wherein the method further comprises:
displaying one or more 3D models for the body or a part of the body shown in the first sequence of 2D images.

8. A method as claimed in claim 7, wherein the user input indicating the required rotation and/or translation of the 2D image plane is received as a user input that rotates and/or translates a displayed 3D model.

9. A computer program product comprising a computer readable medium having computer readable code embodied therein, the computer readable code being configured such that, on execution by a suitable computer or processor, the computer or processor is caused to perform the method of any of claims 1-8.

10. A visual data delivery system (3), the visual data delivery system (3) comprising a processing unit (52) and interface circuitry (56), the visual data delivery system (3) configured to:
process, using the processing unit (52), a sequence of 3-dimensional, 3D, images of a body to generate first 2-dimensional, 2D, image data representing a first sequence of 2D images of the body, wherein the 2D images are images of the body in a 2D image plane through the 3D images, and wherein an amount of data representing the first 2D image data is less than an amount of data representing the 3D images from which the first 2D image data is generated;
send, via the interface circuitry (56), the first 2D image data to a display system (4) for display of the first sequence of 2D images of the body by the display system (4);
receive, via the interface circuitry (56), a 2D image plane adjustment indication from the display system (4), wherein the 2D image plane adjustment indication indicates a required rotation and/or translation of the 2D image plane;
process, using the processing unit (52), the sequence of 3D images and/or a further sequence of 3D images to generate second 2D image data representing a second sequence of 2D images of the body, wherein the 2D images in the second sequence of 2D images are images of the body in the rotated and/or translated 2D image plane; and
send, via the interface circuitry (56), the second 2D image data to the display system (4) for display of the second sequence of 2D images of the body by the display system (4).

11. A visual data delivery system (3) as claimed in claim 10, wherein the visual data delivery system (3) is further configured to:
generate, using the processing unit (52), one or more 3D models representing the body or a part of the body from the sequence of 3D images; and
send, via the interface circuitry (56), the one or more 3D models to the display system (4).

12. A visual data delivery system (3) as claimed in claim 10, wherein the visual data delivery system (3) is further configured to:
process, using the processing unit (52), the sequence of 3D images to identify a type of body or type of body part shown in the sequence of 3D images; and
send, via the interface circuitry (56), an indication of the identified type of body or type of body part, or an indication of one or more predetermined 3D models corresponding to the identified type of body or type of body part, to the display system (4).

13. A visual data delivery system (3) as claimed in claim 10, wherein the visual data delivery system (3) is further configured to:
process, using the processing unit (52), the sequence of 3D images to identify a type of body or type of body part shown in the sequence of 3D images; and
send, via the interface circuitry (56), an indication of the identified type of body or identified type of body part to the display system (4), wherein the identified type of body or identified type of body part is associated with a predetermined 3D model corresponding to the identified type of body or identified type of body part stored at the display system (4).

14. A visual data delivery system (3) as claimed in any of claims 11-13, wherein the one or more 3D models comprises an indication of a current orientation and/or current position of the 2D image plane with respect to the body, and wherein the received 2D image plane adjustment indication is a rotation and/or translation of the indication of the 2D image plane in the one or more 3D models, or a rotation and/or translation of the one or more 3D models.

15. A display system (4), the display system (4) comprising a display screen (64) and interface circuitry (68), wherein the display system (4) is configured to:
receive, via the interface circuitry (68), first 2-dimensional, 2D, image data representing a first sequence of 2D images of a body from a visual data delivery system (3), wherein the 2D images are images of the body in a 2D image plane through 3-dimensional, 3D, images of the body;
display, using the display screen (64), the first sequence of 2D images;
receive, via the interface circuitry (68), a user input from a user of the display system (4), wherein the user input indicates a required rotation and/or translation of the 2D image plane;
send, via the interface circuitry (68), a 2D image plane adjustment indication to the visual data delivery system (3), wherein the 2D image plane adjustment indication indicates the required rotation and/or translation of the 2D image plane;
receive, via the interface circuitry (68), second 2D image data representing a second sequence of 2D images of the body from the visual data delivery system (3), wherein the second sequence of 2D images are images of the body in the rotated and/or translated 2D image plane; and
display, using the display screen (64), the second sequence of 2D images.
